# FASCICULE DE BREVET EUROPEEN

(11) **EP 4 449 448 B1**
(45) Date de publication et mention de la délivrance du brevet: **22.10.2025**
(21) Numéro de dépôt: 22835432.0
(22) Date de dépôt: 15.12.2022
(51) Int. Cl.: G21C 17/07, G21C 19/06, G21C 19/07

(54) **DISPOSITIF POUR MONTER OU DESCENDRE UN ASSEMBLAGE DE COMBUSTIBLE NUCLÉAIRE DANS UNE PISCINE D'UNE INSTALLATION NUCLÉAIRE**
VORRICHTUNG ZUM HEBEN ODER SENKEN EINES KERNBRENNSTABBÜNDELS AUS EINEM UND IN EIN BECKEN EINER KERNTECHNISCHEN ANLAGE
DEVICE FOR RAISING OR LOWERING A NUCLEAR FUEL ASSEMBLY OUT OF AND INTO A POOL OF A NUCLEAR FACILITY

(30) Priorité: 16.12.2021 FR 2113656
(43) Date de publication de la demande: 23.10.2024
(73) Titulaire: FRAMATOME, 92400 Courbevoie (FR)
(72) Inventeur: LOTAUT, Yannick, 69300 CALUIRE ET CUIRE (FR); COUSTOURIER, Franck, 38460 CHAMAGNIEU (FR); BUNOZ, Emmanuel, 69720 SAINT BONNET DE MURE (FR); BASSET, Jean-Christophe, 69005 LYON (FR); GUEDICHI, Abdelghani, 69250 NEUVILLE-SUR-SAONE (FR)
(74) Mandataire: Lavoix
(86) Numéro de dépôt international: PCT/EP2022/086074
(87) Numéro de publication internationale: WO 2023/111139

(56) Documents cités:
- JP-A- S5 712 397
- US-A- 5 546 435
- US-A1- 2019 362 862

## Description

La présente invention concerne un dispositif pour monter ou descendre un assemblage de combustible nucléaire dans une piscine d'une installation nucléaire, ou « descenseur ».

L'invention concerne également un procédé de contrôle d'étanchéité d'un assemblage de combustible nucléaire mettant en œuvre un tel dispositif, et un procédé de rénovation pour obtenir ce dispositif à partir d'un dispositif existant.

Un réacteur nucléaire comprend une cuve dans laquelle est disposée une pluralité d'assemblages de combustible nucléaire formant ensemble le cœur du réacteur nucléaire. Le réacteur nucléaire est généralement disposé dans un puits de réacteur rempli d'eau lorsque le réacteur est à l'arrêt, le puits communiquant avec au moins une piscine d'entreposage également remplie d'eau permettant de réaliser les opérations de maintenance. La piscine d'entreposage comprend différents systèmes pour déplacer, tester, réparer ou entreposer les assemblages de combustible nucléaire.

La piscine comprend notamment un descenseur, c'est-à-dire un dispositif adapté pour descendre des assemblages de combustible nucléaire neufs depuis la surface de la piscine d'entreposage vers le fond de la piscine d'entreposage. Le descenseur permet également de remonter un assemblage de combustible nucléaire près de la surface pour intervention. Le descenseur comprend en général une nacelle adaptée pour recevoir un assemblage de combustible nucléaire, et pour circuler le long de deux rails verticaux. La nacelle est ajourée pour permettre une évacuation de la chaleur dégagée par l'assemblage de combustible nucléaire.

Chaque assemblage de combustible nucléaire comprend un faisceau de crayons de combustible nucléaire, chaque crayon de combustible nucléaire comprenant une gaine tubulaire fermée à ses deux extrémités et contenant du combustible nucléaire. En fonctionnement, un fluide de refroidissement circule à travers le cœur, le long des assemblages de combustible nucléaire, et en particulier le long de leurs crayons de combustible nucléaire. Le fluide de refroidissement maintient le cœur à une température de fonctionnement et joue également le rôle de modérateur pour la réaction nucléaire.

Au cours de son exploitation, un crayon de combustible nucléaire d'un assemblage de combustible nucléaire peut présenter un défaut d'étanchéité, par exemple par percement ou fissuration de la gaine du crayon. Un tel défaut d'étanchéité peut laisser s'échapper des produits de fission résultant de la réaction nucléaire. Ces produits de fission se mélangent au fluide de refroidissement et peuvent venir se déposer sur les éléments constituant le réacteur nucléaire.

La surveillance de l'étanchéité des crayons des assemblages de combustible nucléaire chargés en réacteur nucléaire est réalisée par des mesures régulières de la radioactivité du fluide de refroidissement. Les mesures des activités en gaz et en composants iodés permettent de détecter un défaut d'étanchéité et sont utilisées pour estimer le nombre de crayons affectés, leur taux de combustion, leur emplacement dans le cœur et la taille du ou des défauts. Cependant, ces mesures ne permettent pas de déterminer quel assemblage de combustible nucléaire contient un crayon de combustible présentant un défaut d'étanchéité. Cette détermination a lieu par le contrôle individuel des assemblages de combustible nucléaire irradiés potentiellement affectés lorsque le réacteur est à l'arrêt.

Pour détecter un éventuel défaut d'étanchéité d'un assemblage de combustible nucléaire irradié, il est connu de réaliser un contrôle d'étanchéité par ressuage (« *sipping »* en anglais). Le ressuage consiste à provoquer une augmentation relative de la pression interne des crayons de combustible nucléaire d'un assemblage de combustible nucléaire par rapport à la pression extérieure, ou une augmentation du volume des fluides à l'intérieur des crayons de combustible nucléaire d'un assemblage de combustible nucléaire. Comme les pressions à l'intérieur et à l'extérieur du crayon de combustible tendent à s'équilibrer naturellement, il se produit un transfert des produits de fission de l'intérieur du crayon vers l'extérieur. L'augmentation relative de la pression interne ou du volume des fluides à l'intérieur des crayons de combustible est par exemple obtenue en provoquant une augmentation de la température de l'assemblage de combustible nucléaire ou une diminution de la pression extérieure.

Un contrôle d'étanchéité par ressuage peut être effectué dans une cellule de ressuage fixée dans la piscine d'entreposage. Cependant, dans les centrales nucléaires anciennes, ces cellules de ressuage fixes sont également anciennes, et leur maintenance et leur maintien en exploitation sont coûteux.

En remplacement, on a parfois recours à des cellules de ressuage mobiles installées spécialement dans la piscine avant les opérations de maintenance du réacteur nucléaire, puis retirées une fois les opérations de maintenance terminées. Toutefois, l'installation et le retrait des cellules de ressuages mobiles représente un certain coût.

Le document JP S57 12397 A décrit un dispositif correspondant sensiblement au préambule de la revendication 1.

Un but de l'invention est de réduire le coût des tests d'étanchéité des assemblages de combustible nucléaire, en maintenant la fiabilité des tests.

À cet effet, l'invention a pour objet un dispositif selon la revendication 1.

Selon des modes de réalisation particuliers, le dispositif comprend l'une ou plusieurs des caractéristiques correspondant aux revendications 2 à 5.

L'invention a aussi pour objet un procédé de contrôle d'étanchéité selon la revendication 6.

L'invention a aussi pour objet un procédé de rénovation selon la revendication 7.

L'invention sera mieux comprise à la lecture de la description qui va suivre, donnée uniquement à titre d'exemple et faite en se référant aux dessins annexés, sur lesquels :
- la figure 1 est une vue schématique, de côté, d'une partie d'une piscine d'une installation nucléaire comprenant un dispositif selon l'invention ; et
- la figure 2 est une vue analogue à celle de la figure 1, la piscine comprenant un descenseur de l'état de la technique pouvant faire l'objet d'un procédé de rénovation selon l'invention, afin de le transformer en un dispositif selon l'invention.

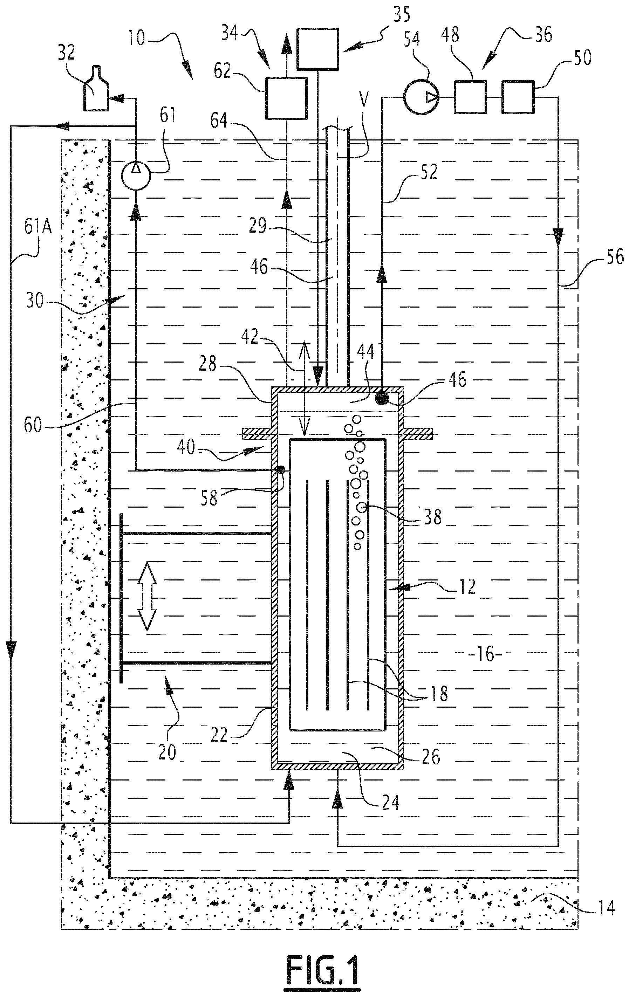

En référence, à la figure 1, on décrit un dispositif 10 selon l'invention.

Le dispositif 10 est adapté pour monter ou descendre un assemblage de combustible nucléaire 12 dans une piscine 14 d'une installation nucléaire (dont seule la piscine 14 est partiellement représentée).

La piscine 14 est remplie d'une étendue d'eau 16. Par « eau », on entend ici une solution aqueuse pouvant comprendre d'autres constituants souhaités dans l'eau de la piscine 14, ou non souhaités, par exemple des polluants issus du combustible nucléaire présent dans l'assemblage de combustible nucléaire 12 ou bien dans un autre assemblage.

L'assemblage de combustible nucléaire 12 comporte par exemple une pluralité de crayons 18 s'étendant selon une direction V sensiblement verticale, et contenant du combustible nucléaire. L'assemblage de combustible nucléaire 12 est par exemple neuf, c'est-à-dire n'ayant pas déjà été en service dans un réacteur (non représenté) de l'installation nucléaire, ou irradié, c'est-à-dire ayant déjà été en service dans un réacteur et sorti de ce réacteur pour une maintenance ou un entreposage.

L'assemblage de combustible 12 est par exemple plus haut que large, et s'étend typiquement sur plusieurs mètres verticalement. L'assemblage de combustible nucléaire 12 présente par exemple une section carrée ou hexagonale perpendiculairement à la direction V.

Le dispositif 10 peut être qualifié de « descenseur », car il est adapté pour descendre l'assemblage de combustible nucléaire 12 depuis la surface de l'étendue d'eau 16 vers le fond de la piscine 14. Le dispositif 10 permet également de remonter l'assemblage de combustible nucléaire 12 vers la surface.

Le dispositif 10 comprend un système de guidage 20 fixé sur la piscine 14, et une nacelle 22 définissant un logement 24 pour recevoir l'assemblage de combustible nucléaire 12 et de l'eau 26 autour de l'assemblage de combustible nucléaire 12, la nacelle 22 étant montée mobile sur le système de guidage 20 en translation selon la direction V. Le dispositif 10 comprend un couvercle 28, et un organe 29 d'actionnement du couvercle.

Le dispositif 10 comprend un système de prélèvement 30 pour prélever au moins un échantillon d'eau 32 dans le logement 24, dans le but de détecter des produits de fission en provenance des crayons 18. Le dispositif 10 comprend un système de dépressurisation 34.

Le dispositif 10 comprend avantageusement un système d'injection d'air 35.

Avantageusement, le dispositif 10 comprend aussi un système de récupération et d'analyse 36.

Grâce au système de prélèvement 30 et au système de dépressurisation 34, le dispositif 10 permet de réaliser un test de ressuage par tirage au vide de l'assemblage de combustible nucléaire 12. Le couvercle 28 et le système de récupération et d'analyse 36 permettent une analyse d'éventuels gaz de ressuage 38.

Le système de guidage 20 comprend par exemple deux rails verticaux (non représentés).

L'eau 26 provient par exemple de l'étendue d'eau 16.

La nacelle 22 comprend une extrémité supérieure 40 définissant un passage 42 adapté pour permettre un chargement de l'assemblage de combustible nucléaire 12 dans le logement 24 par le haut. La nacelle 22 est avantageusement configurée pour canaliser les éventuels gaz de ressuage 38 vers l'extrémité supérieure 40.

Le couvercle 28 est mobile par rapport à la nacelle 22 entre une position active (figure 1) et une position de repos (non représentée, mais se déduisant de la position active en éloignant le couvercle de la nacelle). Le couvercle 28 est par exemple monté rotatif sur la nacelle 22.

Dans la position active, le couvercle ferme le passage 42. La nacelle 22 et le couvercle 28 sont alors étanches à l'eau 16 de la piscine 14, et le logement 24 est adapté pour contenir un ciel gazeux 44, par exemple obtenu par injection d'air par le système d'injection d'air 35 dans le logement 24.

Dans la position de repos, le couvercle 28 laisse libre le passage 42 pour permettre le chargement de l'assemblage de combustible nucléaire 12 dans le logement 24.

L'organe 29 est adapté pour faire passer le couvercle 28 de la position active à la position de repos, et réciproquement. L'organe 29 comprend par exemple une tige 46 montée sur le couvercle 28.

Le système de récupération et d'analyse 36 comprend avantageusement au moins une prise de gaz 46 adaptée pour prélever une fraction du ciel gazeux 44, un détecteur 48 de radioactivité β, un détecteur 50 de radioactivité y, et une canalisation 52 adaptée pour conduire la fraction prélevée de la prise de gaz 46 vers les analyseurs 48, 50. Le système de récupération et d'analyse 36 comprend par exemple une pompe 54 pour mettre en mouvement les gaz prélevés.

Avantageusement, le système de récupération et d'analyse 36 est adapté pour réinjecter ladite fraction du ciel gazeux 44 dans le logement 24, par exemple via une canalisation 56.

Les analyseurs 48, 50 sont adaptés pour déterminer si la fraction prélevée contient des gaz de ressuage 38.

Le système de prélèvement 30 comprend avantageusement au moins une prise de prélèvement 58, et une canalisation 60 adaptée pour conduire les prélèvements d'eau vers l'échantillon d'eau 32. Le système de prélèvement 30 comprend avantageusement une pompe 61 et une canalisation 61A.

Le ou les échantillons d'eau 32 sont par exemple analysés en laboratoire, pour détecter la présence d'un ou plusieurs produits de fission issus du ressuage de l'assemblage de combustible nucléaire 12. Avantageusement, un seul échantillon d'eau est prélevé à la fin du test d'étanchéité.

En complément, des produits de fission sont par exemple recherchés en continu dans l'eau prélevée au niveau de la prise de prélèvement 58 pendant le ressuage de l'assemblage de combustible 12.

Le système de dépressurisation 34 comprend par exemple une pompe à vide 62 et une canalisation 64 reliant le ciel gazeux 44 à la pompe à vide.

Le fonctionnement du dispositif 10 découle de sa structure et va maintenant être brièvement décrit. Ce fonctionnement illustre un procédé de contrôle d'étanchéité de l'assemblage de combustible nucléaire 12 par ressuage selon l'invention

Il est tout d'abord à noter que le dispositif 10 peut fonctionner comme un descenseur classique.

En effet, le couvercle 28 étant dans la position de repos, il est possible de charger l'assemblage de combustible nucléaire 12 dans le logement 24 via le passage 42 situé dans l'extrémité supérieure 40. Le dispositif 10 permet ensuite de descendre ou de monter l'assemblage de combustible nucléaire 12 dans la piscine 14 selon la direction V.

L'assemblage de combustible nucléaire 12 est éventuellement déchargé du dispositif 10 via le passage 42, par exemple pour être entreposé dans la piscine 14.

Si l'on souhaite pratiquer un contrôle d'étanchéité de l'assemblage de combustible nucléaire 12, on le laisse dans le logement 24 ou on le charge dans le logement 24. Le couvercle 28 est mis dans la position active. Le ciel gazeux est formé dans le logement 24 devenu étanche au moyen du dispositif d'injection d'air 35. Le remplissage du couvercle 28 en air est avantageusement réalisé jusqu'à ce que de l'air l'échappe entre le couvercle 28 et la nacelle 22, le couvercle et la nacelle n'étant pas reliés entre eux de manière étanche pendant l'injection d'air.

Puis, le système de dépressurisation 34 extrait du logement 24 une partie du ciel gazeux 44 et abaisse la pression du ciel gazeux.

Cette baisse de pression ambiante dans le logement 24 déclenche un ressuage du ou des crayons 18 présentant un défaut d'étanchéité.

Le système de prélèvement 60 fournit l'échantillon d'eau 32, avantageusement en fin de test. L'échantillon d'eau 32 est analysé pour détecter la présence d'un ou plusieurs produits de fission issus du ressuage de l'assemblage de combustible nucléaire 12.

En complément éventuel, de l'eau est prélevée dans le logement 24 au niveau de la prise de prélèvement 58, avantageusement en continu, et des produits de fission éventuellement présents dans l'eau prélevée sont recherchés en continu ou en fin de cycle de ressuage.

Par exemple, le prélèvement liquide est dégazé et une analyse de la radioactivité bêta et gamma du gaz extrait est réalisée. Afin de concentrer les produits de fission, les prélèvements liquide et gaz sont avantageusement réinjectés en bas de la nacelle 22 par la canalisation 61A.

Eventuellement, les gaz de ressuage 38 remontent dans la nacelle 22 qui les canalise, puis traversent l'extrémité supérieure 40, et sont recueillis dans le ciel gazeux 44.

Ensuite, en complément éventuel, au moins une fraction du ciel gazeux 44 est avantageusement récupérée et analysée par le système de récupération et d'analyse 36, ce qui permet d'identifier des gaz de ressuage par leur radioactivité.

Si aucun produit de fission n'est détecté, l'assemblage de combustible nucléaire 12 testé est déclaré étanche. Si au contraire des produits de fission sont détectés à l'aide du système de prélèvement 30, l'assemblage de combustible nucléaire 12 est déclaré non étanche. L'analyse de la radioactivité du ciel gazeux 44 fournit avantageusement des informations complémentaires.

Grâce aux caractéristiques décrites ci-dessus, le dispositif 10 est un descenseur et permet aussi de réaliser rapidement et à moindre coût un test de ressuage. Grâce au dispositif 10, la piscine 14 n'a pas besoin de cellule de ressuage fixe ou mobile classique.

Un procédé de rénovation selon l'invention va maintenant être décrit.

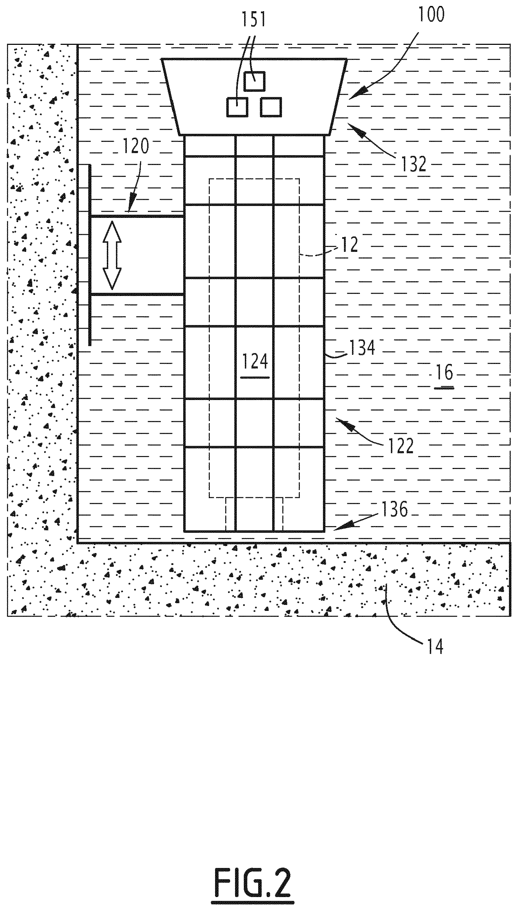

Il consiste par exemple à transformer un dispositif 100 représenté sur la figure 2, qui est un descenseur classique, en le dispositif 10 représenté sur la figure 1.

Le dispositif 100 comprend un dispositif de guidage 120 analogue au dispositif de guidage 20, et une nacelle 122 comprenant une extrémité supérieure 14 analogue à l'extrémité supérieure 40. La nacelle 122 définit un logement 124 adaptée pour recevoir l'assemblage de combustible nucléaire 12.

La nacelle 122 diffère de la nacelle 22, notamment du fait qu'elle est ajourée pour permettre une circulation de l'eau 16 autour de l'assemblage de combustible nucléaire 12. La nacelle 122 possède une enveloppe latérale 134 qui n'est pas étanche à l'eau 16.
Afin de rénover le dispositif 100, on remplace la nacelle 122 par une nacelle analogue à la nacelle 22 représentée sur la figure 1, et on ajoute un système de prélèvement et un système de dépressurisation analogues au système de prélèvement 30 et au système de dépressurisation 34. Il devient alors possible de mettre en un couvercle analogue au couvercle 28. Le dispositif ainsi rénové permet de réaliser facilement un contrôle d'étanchéité par ressuage de l'assemblage de combustible nucléaire 12 par abaissement de la pression dans le logement 24.

## Revendications

1. Dispositif (10) pour monter ou descendre un assemblage de combustible nucléaire (12) dans une piscine (14) d'une installation nucléaire, la piscine étant destinée à contenir de l'eau (16), le dispositif (10) comprenant :
- une nacelle (22) définissant un logement (24) pour recevoir l'assemblage de combustible nucléaire (12) et de l'eau (26) autour de l'assemblage de combustible nucléaire (12), la nacelle (22) comprenant une extrémité supérieure (40) définissant un passage (42) adapté pour permettre un chargement de l'assemblage de combustible nucléaire (12) dans le logement (24) par le haut,
- un couvercle (28) mobile par rapport à la nacelle (22) entre, d'une part, une position active dans laquelle le couvercle (28) ferme ledit passage (42), dans laquelle la nacelle (22) et le couvercle (28) sont étanches à l'eau (16) de la piscine (14), et dans laquelle le logement (24) est adapté pour contenir un ciel gazeux (44), et, d'autre part, une position de repos dans laquelle le couvercle (28) laisse libre ledit passage (33) pour permettre ledit chargement de l'assemblage de combustible nucléaire (12), et
- au moins un système de prélèvement (30) adapté pour fournir au moins un échantillon d'eau (32) prélevé dans le logement (24),
**caractérisé en ce que** :
- le dispositif (10) comprend un système de guidage (20) destiné à être fixé sur la piscine (14),
- la nacelle (22) est montée mobile sur le système de guidage (20) en translation selon une direction (V) destinée à être sensiblement verticale, et
- le dispositif (10) comprend un système de dépressurisation (34) adapté pour extraire du logement (24) une partie du ciel gazeux et abaisser la pression du ciel gazeux (44) dans le logement (24), le couvercle (28) étant dans la position active.

2. Dispositif (10) selon la revendication 1, dans lequel le dispositif de dépressurisation (34) comprend une pompe à vide (62) et une canalisation (64) reliant la pompe à vide (62) au ciel gazeux (44).

3. Dispositif (10) selon la revendication 1 ou 2, dans lequel la nacelle (22) est configurée pour canaliser d'éventuels gaz de ressuage (38) de l'assemblage de combustible nucléaire (12) vers le ciel gazeux (44), le dispositif (10) comprenant un système de récupération et d'analyse (36) adapté pour récupérer et analyser une fraction du ciel gazeux (44).

4. Dispositif (10) selon la revendication 3, dans le système de récupération et d'analyse (36) est adapté pour réinjecter ladite partie du ciel gazeux (44) dans le logement (24).

5. Dispositif (10) selon l'une quelconque des revendications 1 à 5, dans lequel le couvercle (28) est monté rotatif sur la nacelle (22) entre la position active et la position de repos.

6. Procédé de contrôle d'étanchéité d'un assemblage de combustible nucléaire (12) par ressuage, mettant en œuvre un dispositif (10) selon l'une quelconque des revendications 1 à 5, comprenant les étapes suivantes :
- chargement de l'assemblage de combustible nucléaire (12) dans la nacelle (22),
- déplacement du couvercle (28) de la position de repos à la position active,
- extraction une partie du ciel gazeux et abaissement de la pression du ciel gazeux par le dispositif de dépressurisation, et
- prélèvement d'au moins un échantillon d'eau (32) dans le logement (24).

7. Procédé de rénovation pour obtenir un dispositif (10) selon l'une quelconque des revendications 1 à 5, comprenant :
- un remplacement d'une nacelle (122) préexistante ajourée par la nacelle (22) dudit dispositif (10), et
- un ajout du système de prélèvement (30) et du système de dépressurisation (34).

## Patentansprüche

1. Vorrichtung (10) zum Heben oder Senken eines Kernbrennstabbündels (12) in einem Becken (14) einer Kernkraftanlage, wobei das Becken dazu bestimmt ist, Wasser (16) zu enthalten, die Vorrichtung (10) umfassend:
- eine Gondel (22), die ein Gehäuse (24) zum Aufnehmen des Kernbrennstabbündels (12) und des Wassers (26) um das Kernbrennstabbündel (12) herum definiert, die Gondel (22) umfassend ein oberes Ende (40), das einen Durchgang (42) definiert, der angepasst ist, um das Laden des Kernbrennstabbündels (12) in das Gehäuse (24) von oben zu ermöglichen,
- einen Deckel (28), der in Bezug auf die Gondel (22) bewegbar ist zwischen einerseits einer aktiven Position, in der der Deckel (28) den Durchgang (42) verschließt, wobei die Gondel (22) und der Deckel (28) gegen das Wasser (16) des Beckens (14) abgedichtet sind, und in der das Gehäuse (24) angepasst ist, um einen gasförmigen Kopfraum (44) zu enthalten, und andererseits einer Ruhestellung, in der der Deckel (28) den Durchgang (33) frei lässt, um das Laden des Kernbrennstabbündels (12) zu ermöglichen, und
- mindestens ein Entnahmesystem (30), das angepasst ist, um mindestens eine Wasserprobe (32) bereitzustellen, die aus dem Gehäuse (24) entnommen wurde,
**dadurch gekennzeichnet, dass**:
- die Vorrichtung (10) ein Führungssystem (20) umfasst, das dazu bestimmt ist, an dem Becken (14) befestigt zu werden,
- die Gondel (22) bewegbar auf dem Führungssystem (20) für eine Translation in einer Richtung (V) montiert ist, die dazu bestimmt ist, im Wesentlichen vertikal zu sein, und
- die Vorrichtung (10) ein Druckentlastungssystem (34) umfasst, das angepasst ist, um einen Teil des gasförmigen Kopfraums aus dem Gehäuse (24) zu extrahieren und den Druck des gasförmigen Kopfraums (44) in dem Gehäuse (24) zu senken, wobei der Deckel (28) in der aktiven Position ist.

2. Vorrichtung (10) nach Anspruch 1, wobei die Druckentlastungsvorrichtung (34) eine Vakuumpumpe (62) und eine Rohrleitung (64) umfasst, die die Vakuumpumpe (62) mit dem gasförmigen Kopfraum (44) verbindet.

3. Vorrichtung (10) nach Anspruch 1 oder 2, wobei die Gondel (22) konfiguriert ist, um mögliche Klopfgase (38) aus dem Kernbrennstabbündel (12) in den gasförmigen Kopfraum (44) zu kanalisieren, die Vorrichtung (10) umfassend ein Rückgewinnungs- und Analysesystem (36), das angepasst ist, um einen Teil des gasförmigen Kopfraums (44) zurückzugewinnen und zu analysieren.

4. Vorrichtung (10) nach Anspruch 3, wobei das Rückgewinnungs- und Analysesystem (36) angepasst ist, um den Teil des gasförmigen Kopfraums (44) wieder in das Gehäuse (24) einzuleiten.

5. Vorrichtung (10) nach Anspruch 1 bis 5, wobei der Deckel (28) drehbar zwischen der aktiven Position und der Ruheposition an der Gondel (22) montiert ist.

6. Verfahren zur Dichtheitsprüfung eines Kernbrennstabbündels (12) durch Eindringprüfung, wobei eine Vorrichtung (10) nach einem der Ansprüche 1 bis 5 eingesetzt wird, umfassend die folgenden Schritte:
- Laden des Kernbrennstabbündels (12) in die Gondel (22),
- Bewegen des Deckels (28) aus der Ruheposition in die aktive Position,
- Extrahieren eines Teils des gasförmigen Kopfraum s und Senken des Drucks des gasförmigen Kopfraums durch die Druckentlastungsvorrichtung, und
- Entnehmen mindestens einer Wasserprobe (32) in der Aufnahme (24).

7. Erneuerungsverfahren zum Erlangen einer Vorrichtung (10) nach einem der Ansprüche 1 bis 5, umfassend:
- ein Ersetzen einer bereits vorhandenen, durchbrochenen Gondel (122) durch die Gondel (22) der Vorrichtung (10), und
- ein Hinzufügen des Entnahmesystems (30) und des Druckentlastungssystems (34).

## Claims

1. A device (10) for raising or lowering a nuclear fuel assembly (12) in a pool (14) of a nuclear facility, the pool being intended to contain water (16), the device (10) comprising:
- a gondola (22) defining a housing (24) for accommodating the nuclear fuel assembly (12) and water (26) around the nuclear fuel assembly (12), the gondola (22) comprising an upper end (40) defining a passage (42) suitable for the loading of the nuclear fuel assembly (12) into the housing (24) from above,
- a cover (28) movable relative to the gondola (22) between an active position wherein the cover (28) closes said passage (42), wherein the gondola (22) and the cover (28) are watertight with regard to the water (16) of the pool (14), and wherein the housing (24) is suitable for containing a gas blanket (44), and a rest position wherein the cover (28) leaves said passage (33) free for said loading of the nuclear fuel assembly (12), and
- at least one sampling system (30) suitable for providing at least one water sample (32) taken from the housing (24),
**characterized in that**:
- the device (10) comprises a guide system (20) intended to be attached to the pool (14),
- the gondola (22) is mounted apt to move on the guide system (20) in translation along a direction (V) intended to be substantially vertical, and
- the device (10) comprises a depressurization system (34) suitable for extracting from the housing (24) a portion of the gas blanket and lowering the pressure of the gas blanket (44) in the housing (24), the cover (28) being in the active position.

2. The device (10) according to claim 1, wherein the depressurization device (34) comprises a vacuum pump (62) and a pipe (64) connecting the vacuum pump (62) to the gas blanket (44).

3. The device (10) according to claim 1 or 2, wherein the gondola (22) is configured to channel sipping gases (38), if any, from the nuclear fuel assembly (12) to the gas blanket (44), the device (10) comprising a recovery and analysis system (36) suitable for recovering and analyzing a fraction of the gas blanket (44).

4. The device (10) according to claim 3, wherein the recovery and analysis system (36) is suitable for re-injecting said portion of the gas blanket (44) into the housing (24).

5. The device (10) according to any of claims 1 to 5, wherein the cover (28) is mounted apt to rotate on the gondola (22) between the active position and the rest position.

6. A method of checking the leak-tightness of a nuclear fuel assembly (12) by sipping, using a device (10) according to any of claims 1 to 5, comprising the following steps:
- loading the nuclear fuel assembly (12) into the gondola (22),
- moving the cover (28) from the rest position to the active position,
- extracting a part of the gas blanket and lowering the pressure of the gas blanket by the depressurization device, and
- collecting at least one water sample (32) from the housing (24).

7. A retrofitting method for obtaining a device (10) according to any of claims 1 to 5, comprising:
- replacing a pre-existing perforated gondola (122) by the gondola (22) of said device (10), and
- adding of the sampling system (30) and of the depressurization system (34).
